# EUROPEAN PATENT SPECIFICATION

(11) **EP 0 798 343 B1**
(45) Date of publication and mention of the grant of the patent: **07.05.2003**
(21) Application number: 97301851.8
(22) Date of filing: 19.03.1997
(51) Int. Cl.: C08L 83/04

(54) **Silicone rubber composition for fluorocarbon resin-coated fixing rolls and fluorocarbon resin-coated fixing rolls**
Siliconkautschuk-Zusammensetzung für mit Fluorkohlenwasserstoffharz beschichtete Fixierwalzen und mit Fluorkohlenwasserstoffharz beschichtete Fixierwalzen
Composition d'élastomère de silicone pour des rouleaux de fixage revêtus d'une résine fluorocarbonnée et rouleaux de fixage revêtus d'une résine fluorocarbonnéé

(30) Priority: 26.03.1996 JP 9627896
(43) Date of publication of application: 01.10.1997
(73) Proprietor: Dow Corning Toray Silicone Company, Limited, Tokyo 103 (JP)
(72) Inventor: Nakamura, Akito, Dow Corning Toray, Ichihara-shi, Chiba-Prefecture (JP); Ushio, Yoshito, Dow Corning Toray, Ichihara-shi, Chiba-Prefecture (JP)
(74) Representative: Kyle, Diana

(56) References cited:
- EP-A- 0 137 278
- EP-A- 0 517 524
- EP-A- 0 548 860
- CHEMICAL ABSTRACTS, vol. 118, no. 26, 28 June 1993 Columbus, Ohio, US; abstract no. 256456, XP002050898 & JP 04 339 863 A (DOW TORAY) 26 November 1992

## Description

This invention relates to silicone rubber compositions for use in fluorocarbon resin-covered fixing rolls (hereinafter abbreviated in some cases as FFR silicone rubber compositions) and to fluorocarbon resin-covered fixing rolls. More particularly, this invention relates to an FFR silicone rubber composition that, even when cured at the relatively low temperatures necessary to avoid the development of wrinkles or creases in the fluorocarbon resin layer on the surface of fluorocarbon resin-covered fixing rolls, is capable of forming a silicone rubber with a low compression set and an excellent adherence to both the roll shaft and fluorocarbon resin layer. The invention also relates to a highly reliable fluorocarbon resin-covered fixing roll.

Fluorocarbon resin-covered fixing rolls comprising a fluorocarbon resin layer formed on the circumference of a metal roll shaft across an interposed layer of relatively low-durometer silicone rubber exhibit excellent toner release and make possible a reduction in equipment size and are therefore well-adapted for use in electrophotographic copiers, printers, facsimile machines, and the like as described in JP (Kokai) Numbers Sho 53-74436 (74,436/1978), Sho 57-89785 (89,785/1982), Sho 59-74578 (74,578/1984), and Sho 59-52269 (52,269/1984).

Fluorocarbon resin-covered fixing rolls of this type are typically fabricated by firstly, treating the circumference of the roll shaft with primer, inserting the treated roll shaft into a fluorocarbon resin tube, injecting a silicone rubber composition into the cavity created between the roll shaft and the tube, and then curing the silicone rubber composition. This process requires that the silicone rubber composition be cured at relatively high temperatures, for example, at 150°C to 200°C, in order to achieve a satisfactory adhesion by the silicone rubber layer to both the roll shaft and fluorocarbon resin layer. However, due to the difference in coefficient of thermal expansion between the silicone rubber composition and fluorocarbon resin, this heating episode frequently causes the appearance of creases or wrinkles in the fluorocarbon resin layer on the surface of the resulting fluorocarbon resin-covered fixing roll. This problem is particularly noticeable with the use of silicone rubber compositions that yield relatively low-durometer silicone rubbers, for example, with a JIS A durometer not exceeding 20.

When, on the other hand, the silicone rubber composition is cured at relatively low temperatures, for example, 80°C to 120°C, to avoid creasing in the fluorocarbon resin layer on the surface of the fluorocarbon resin-covered fixing roll, the result is a poor adherence to the roll shaft and fluorocarbon resin layer that are in contact with the silicone rubber composition during the course of its cure. Even preliminary treatment of the roll shaft and fluorocarbon resin layer with primer does not in this case yield much improvement in the corresponding adherence. Thus, while fluorocarbon resin-covered fixing rolls fabricated by a relatively low-temperature cure of the silicone rubber composition will not suffer from creasing in the surface fluorocarbon resin layer, they will suffer from a poor reliability due to a pronounced tendency for delamination to occur at the roll shaft/silicone rubber layer interface and fluorocarbon resin layer/silicone rubber layer interface.

The present inventors have discovered that an addition-reaction curing silicone rubber composition containing particular amounts of cyclic polydiorganosiloxane comprising at least 2 silicon-bonded alkenyl groups in each molecule can, even when cured at relatively low temperatures, provide a low-compression-set silicone rubber that exhibits good adherence to the roll shaft and fluorocarbon resin when cured in contact with the same. In specific terms,
the present invention takes as its object the introduction of an FFR silicone rubber composition that even whin cured at the relatively low temperatures that avoid the development of creases in the fluorocarbon resin layer on the surface of fluorocarbon resin-covered fixing rolls can form a relatively low-durometer silicone rubber with a low compression set and excellent adherence to the roll shaft and fluorocarbon resin layer. Another, objective of the present invention is to provide highly reliable fluorocarbon resin-covered fixing rolls.

EP-A-0517524 describes a roll base-forming composition comprising an organo-polysiloxane having at least two alkenyl groups, an organohydrogenpolysiloxane having at least two hydrogen atoms directly attached to silicon atoms, a platinum catalyst, an inorganic filler and a triazole compound. Optional additional additives include addition reaction controlling agents such as vinyl-containing organopolysiloxanes. The compositions have relatively low hardness, improved physical properties and flame-retardancy.

A silicone rubber composition for the formation of the silicone rubber layer in fluorocarbon resin-covered fixing rolls in which a fluorocarbon resin layer is placed over the circumference of a roll shaft with a silicone rubber layer interposed between the fluorocarbon resin layer and the roll shaft, where the silicone rubber composition comprises
(A) 100 weight parts straight-chain polydiorganosiloxane comprising at least 2 silicon-bonded alkenyl groups in each molecule,
(B) 5 to 500 weight parts inorganic filler,
(C) 0.01 to 0.5 to weight parts cyclic polydiorganosiloxane comprising at least 2 silicon-bonded alkenyl groups in each molecule,
(D) polyorganosiloxane comprising at least 2 silicon-bonded hydrogen atoms in each molecule, in a quantity that affords a value from 0.1 to 10 for the molar ratio of silicon-bonded hydrogen in component (D) to the total alkenyl in components (A) and (C), and
(E) platinum catalyst in a catalytic quantity. Also, a fluorocarbon resin-covered fixing roll characterized in that the silicone rubber layer is formed by the cure of the above-described silicone rubber composition.

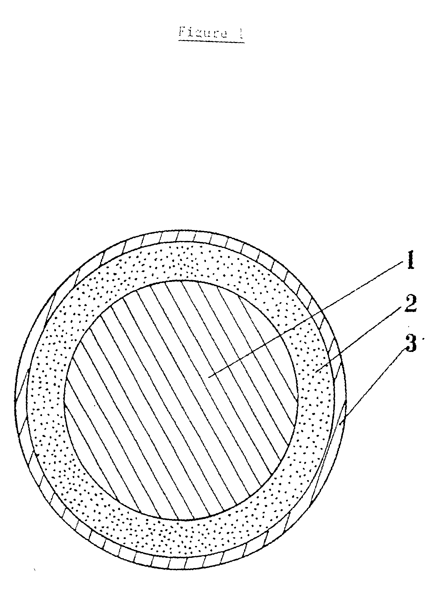

Figure 1 contains a cross section of a fluorocarbon resin-covered fixing roll according to the present invention comprising roll shaft 1, silicone rubber layer 2, and fluorocarbon resin layer 3.

The silicone rubber composition according to the present invention is intended for the formation of the silicone rubber layer in fluorocarbon resin-covered fixing rolls in which a fluorocarbon resin layer is placed over the circumference of a roll shaft with a silicone rubber layer interposed between the fluorocarbon resin layer and the roll shaft. This silicone rubber composition comprises
(A) 100 weight parts straight-chain polydiorganosiloxane comprising at least 2 silicon-bonded alkenyl groups in each molecule,
(B) 5 to 500 weight parts inorganic filler,
(C) 0.01 to 0.5 weight parts cyclic polydiorganosiloxane comprising at least 2 silicon-bonded alkenyl groups in each molecule,
(D) polyorganosiloxane that comprising at least 2 silicon-bonded hydrogen atoms in each molecule, in a quantity that affords a value from 0.1 to 10 for the molar ratio of silicon-bonded hydrogen in component (D) to the total silicon-bonded alkenyl in components (A) and (C), and
(E) platinum catalyst in a catalytic quantity.

In addition, with respect to fluorocarbon resin-covered fixing rolls in which a fluorocarbon resin layer is placed over the circumference of a roll shaft with a silicone rubber layer interposed between the fluorocarbon resin layer and roll shaft, the fluorocarbon resin-covered fixing roll according to the present invention is characterized in that the silicone rubber layer is formed by the cure of the silicone rubber composition described above.

The FFR silicone rubber composition according to the present invention will be explained in detail first. Component (A), which is the base ingredient of the present composition, is a straight-chain polydiorganosiloxane comprising at least 2 silicon-bonded alkenyl groups in each molecule. Component (A) should have a substantially straight-chain molecular structure, although some branching in the main chain can be accepted. Component (A) must contain at least 2 silicon-bonded alkenyl groups in each molecule in order to obtain a thorough cure of the composition. The bonding position for the Si-bonded alkenyl groups in component (A) is not critical, but the presence of an average of at least 0.5 silicon-bonded alkenyl groups in pendant positions on the molecular chain is preferred because this provides a particularly low compression set in the ultimately obtained silicone rubber. The silicon-bonded alkenyl groups in component (A) is exemplified by vinyl, allyl, butenyl, pentenyl, hexenyl, and heptenyl, where vinyl and hexenyl are particularly preferred. The non-alkenyl silicon-bonded groups in component (A) are exemplified by alkyl groups such as methyl, ethyl, propyl, butyl, pentyl, and hexyl; aryl groups such as phenyl, tolyl, and xylyl; aralkyl groups such as benzyl, and phenylethyl; haloalkyl groups such as 3-chloropropyl, and 3,3,3-trifluoropropyl; alkoxy groups such as methoxy, and ethoxy; and the hydroxyl group. The methyl group is specifically preferred among the preceding. The viscosity of component (A) at 25°C is preferably at least 1,000 mPa·s, wherein the range from 1,000 to 1,000,000 mPa·s is particularly preferred and the range from 10,000 to 500,000 mPa·s is even more preferred.

Component (A) is exemplified by vinyldimethylsiloxy-endblocked polydimethylsiloxanes, vinyldimethylsiloxy-endblocked dimethylsiloxane-methylphenylsiloxane copolymers, vinyldimethylsiloxy-endblocked dimethylsiloxane-(3,3,3-trifluoropropyl)methylsiloxane copolymers, trimethylsiloxy-endblocked vinylmethylsiloxane-dimethylsiloxane copolymers, trimethylsiloxy-endblocked polyvinylmethylsiloxanes, trimethylsiloxy-endblocked vinylmethylsiloxane-methylphenylsiloxane copolymers, trimethylsiloxy-endblocked vinylmethylsiloxane-dimethylsiloxane-methylphenylsiloxane copolymers, trimethylsiloxy-endblocked vinylmethylsiloxane-dimethylsiloxane-(3,3,3-trifluoropropyl)methylsiloxane copolymers, vinyldimethylsiloxy-endblocked vinylmethylsiloxane-dimethylsiloxane copolymers, vinyldimethylsiloxy-endblocked polyvinylmethylsiloxanes, vinyldimethylsiloxy-endblocked vinylmethylsiloxane-methylphenylsiloxane copolymers, vinyldimethylsiloxy-endblocked vinylmethylsiloxane-dimethylsiloxane-methylphenylsiloxane copolymers, silanol-endblocked vinylmethylsiloxane-dimethylsiloxane copolymers, silanol-endblocked polyvinylmethylsiloxanes, silanol-endblocked vinylmethylsiloxane-dimethylsiloxane-methylphenylsiloxane copolymers, and silanol-endblocked vinylmethylsiloxane-dimethylsiloxane-(3,3,3-trifluoropropyl)methylsiloxane copolymers. These straight-chain polydiorganosiloxanes may be used singly or in combinations of two or more. In addition, straight-chain polydiorganosiloxanes having on average at least 0.5 pendant silicon-bonded alkenyl groups in the molecular chain can be obtained by mixing straight-chain polydiorganosiloxane lacking pendant silicon-bonded alkenyl groups in the molecular chain and straight-chain polydiorganosiloxane bearing pendant silicon-bonded alkenyl groups in the molecular chain.

The inorganic filler (B) functions to impart properties such as mechanical strength, thermal conductivity, or electrical conductivity to the silicone rubber afforded by the cure of the subject composition. Component (B) is exemplified by precipitated silica micropowders, fumed silica micropowders, calcined silica micropowders, fumed titanium oxide micropowders, crushed quartz micropowders, diatomaceous earth micropowders, aluminosilicate micropowders, iron oxide micropowders, zinc oxide micropowders, calcium carbonate micropowders, carbon black micropowders, alumina micropowders, aluminum hydroxide micropowders, silver micropowders, and nickel micropowders. These inorganic fillers may be used singly or in combinations of 2 or more. Moreover, component (B) may be directly admixed in an untreated form; or may be admixed after a preliminary surface treatment with an organosilicon compound such as an organoalkoxysilane, organochlorosilane, or organodisilazane; or may be subjected to surface treatment with such an organosilicon compound while being mixed into component (A).

Component (B) is admixed at from 5 to 500 weight parts per 100 weight parts component (A) and is preferably admixed at from 10 to 300 weight parts per 100 weight parts component (A). The ultimately obtained silicone rubber will have a poor mechanical strength when component (B) is added at less than 5 weight parts per 100 weight parts component (A). The use of more than 500 weight parts makes it difficult to homogeneously mix component (B) into the silicone rubber composition.

Component (C) functions to induce the formation, even upon curing at the relatively low temperatures that avoid creasing in the fluorocarbon resin layer on the surface of the fluorocarbon resin-covered fixing roll, of a low-compression-set silicone rubber that adheres well to both the roll shaft and fluorocarbon resin layer. Component (C) is cyclic polydiorganosiloxane that contains at least 2 silicon-bonded alkenyl groups in each molecule, and cyclic polydiorganosiloxanes with the general formula 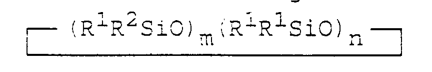 are preferred for component (C). Each R¹ in the aforementioned formula is independently selected from non-alkenyl monovalent hydrocarbon groups and is exemplified by alkyl groups such as methyl, ethyl, propyl, butyl, pentyl, and hexyl; aryl groups such as phenyl, tolyl, and xylyl; aralkyl groups such as benzyl and phenylethyl; and haloalkyl groups such as 3-chloropropyl and 3,3,3-trifluoropropyl. The methyl and phenyl groups are specifically preferred. R² in the formula is alkenyl and is exemplified by vinyl, allyl, butenyl, pentenyl, hexenyl, and heptenyl with vinyl and hexenyl being particularly preferred. The subscript m in the preceding formula is an integer with a value of from 2 to 20 and preferably of from 3 to 20. The subscript n is an integer of from 0 to 18 and preferably of from 0 to 17. m + n In the formula is an integer of from 3 to 20 and preferably of from 4 to 10.

Component (C) is exemplified by cyclic polyalkenylmethylsiloxanes such as 1,3,5-trivinyl-1,3,5-trimethylcyclotrisiloxane, 1,3,5,7-tetravinyl-1,3,5,7-tetramethylcyclotetrasiloxane, 1,3,5,7,9-pentavinyl-1,3,5,7,9-pentamethylcyclopentasiloxane, 1,3,5-trihexenyl-1,3,5-trimethylcyclotrisiloxane, 1,3,5,7-tetrahexenyl-1,3,5,7-tetramethylcyclotetrasiloxane, and 1,3,5,7,9-pentahexenyl-1,3,5,7,9-pentamethylcyclopentasiloxane, and also by cyclic vinylmethylsiloxane-dimethylsiloxane copolymers, cyclic hexenylmethylsiloxane-dimethylsiloxane copolymers, cyclic vinylmethylsiloxane-methylphenylsiloxane copolymers, and cyclic vinylmethylsiloxane-(3,3,3-trifluoropropyl)methylsiloxane copolymers. These cyclic diorganopolysiloxanes may be used singly or in combinations of two or more.

Component (C) is added
at from 0.01 to 0.5 weight part,
in each case per 100 weight parts of component (A).

Component (D), which is a crosslinker for curing the present composition, is a polyorganosiloxane that contains at least 2 silicon-bonded hydrogen atoms in each molecule. The molecular structure of component (D) is exemplified by straight-chain, partially branched straight-chain, branched chain, cyclic, and network molecular structures, with straight-chain and partially branched straight-chain structures being preferred. Polyorganosiloxanes with the following general formula
are preferred for component (D) 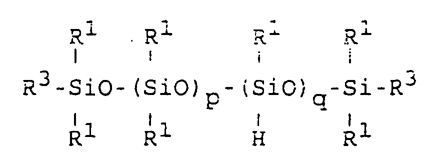 Each R¹ in this formula is independently selected from non-alkenyl monovalent hydrocarbon groups, exemplified by the same monovalent hydrocarbon groups as elaborated above. Methyl and phenyl are specifically preferred for R¹. Each R³ in the formula is the hydrogen atom or an independently selected non-alkenyl monovalent hydrocarbon group. The monovalent hydrocarbon groups encompassed by R³ are exemplified by the same monovalent hydrocarbon groups as elaborated above for R¹. Methyl and phenyl are specifically preferred for R³. The subscripts p and q in the preceding formula are each integers with values of 0 or more. When q in the formula is 0, both of the groups R³ must be the hydrogen atom. While p + q for the formula is not critical, this sum preferably is an integer with a value from 5 to 1,000 and more preferably from 5 to 100. The viscosity of component (D) at 25°C is preferably from 3 to 10,000 mPa·s and more preferably is from 3 to 300 mPa·s.

The subject component (D) is exemplified by trimethylsiloxy-endblocked polymethylhydrogensiloxanes, trimethylsiloxy-endblocked dimethylsiloxane-methylhydrogensiloxane copolymers, dimethylhydrogensiloxy-endblocked polymethylhydrogensiloxanes, dimethylhydrogensiloxy-endblocked polydimethylsiloxanes, and dimethylhydrogensiloxy-endblocked dimethylsiloxane-methylhydrogensiloxane copolymers. These polyorganosiloxanes may be used singly or in combinations of two or more.

Component (D) is added in a quantity that affords a value from 0.1 to 10 and preferably from 0.3 to 5 for the molar ratio of silicon-bonded hydrogen in component (D) to the total alkenyl in components (A) and (C). Compositions in which this molar ratio is below 0.1 do not undergo a thorough cure. When this ratio in the composition exceeds 10, the resulting silicone rubber will suffer from such problems as bubble formation and a very high durometer, which will typically make the rubber undesirable for use in fluorocarbon resin-covered fixing rolls with their requirement for a silicone rubber with a relatively low durometer, i.e., a JIS A durometer no greater than 20.

Component (E) is a platinum catalyst that accelerates the cure of the subject composition. Component (E) is exemplified by platinum black, platinum-on-alumina powder, platinum-on-silica powder, platinum-on-carbon powder, chloroplatinic acid, alcohol solutions of chloroplatinic acid, platinum/olefin complexes, platinum/vinylsiloxane complexes, and also by micropowder comprising a platinum catalyst as described above dispersed in a thermoplastic organic resin such as a methyl methacrylate resin, polycarbonate resin, polystyrene resin, and silicone resin.

Component (E) is added in a catalytic quantity and may be added in any quantity sufficient to cure the composition under consideration. In specific terms, the addition of component (E) preferably provides from 0.01 to 1,000 weight parts and more preferably from 0.1 to 500 weight parts platinum metal in component (E) for each one million weight parts component (A).

A cure inhibitor is preferably added to the subject composition as an optional component in order to improve the composition's storage stability and handling characteristics. The cure inhibitor is exemplified by acetylenic compounds such as 3-methyl-1-butyn-3-ol, 3,5-dimethyl-1-hexyn-3-ol, and 3-phenyl-1-butyn-3-ol; ene-yne compounds such as 3-methyl-3-penten-1-yne and 3,5-dimethyl-3-hexen-1-yne; triazoles such as benzotriazole; phosphines; mercaptans; and hydrazines. The cure inhibitor is preferably added at from 0.001 to 5 weight parts per 100 weight parts component (A).

In order to adjust the durometer of the ultimately obtained silicone rubber, the subject composition preferably contains as an optional component straight-chain polydiorganosiloxane that contains neither Si-bonded alkenyl nor Si-bonded hydrogen. This polydiorganosiloxane should have a substantially straight-chain molecular structure, although some branching in the main chain can be accepted. The Si-bonded groups in such a polydiorganosiloxane are exemplified by alkyl groups such as methyl, ethyl, propyl, butyl, pentyl, and hexyl; aryl groups such as phenyl, tolyl, and xylyl; aralkyl groups such as benzyl and phenylethyl; haloalkyl groups such as 3-chloropropyl and 3,3,3-trifluoropropyl; alkoxy groups such as methoxy and ethoxy; and the hydroxyl group. The methyl and phenyl groups are specifically preferred here. In order to obtain good handling characteristics for the corresponding silicone rubber composition and fabricate high-quality fluorocarbon resin-coated fixing rolls, the viscosity of this straight-chain polydiorganosiloxane at 25°C is preferably at least 100 mPa·s and particularly preferably is from 1,000 to 10,000,000 mPa·s.

This straight-chain polydiorganosiloxane is exemplified by trimethylsiloxy-endblocked polydimethylsiloxanes, trimethylsiloxy-endblocked dimethylsiloxane-methylphenylsiloxane copolymers, trimethylsiloxy-endblocked dimethylsiloxane-(3,3,3-trifluoropropyl)methylsiloxane copolymers, silanol-endblocked polydimethylsiloxanes, silanol-endblocked dimethylsiloxane-methylphenylsiloxane copolymers, and silanol-endblocked dimethylsiloxane-(3,3,3-trifluoropropyl)methylsiloxane copolymers. These straight-chain polydiorganosiloxanes may be used singly or as combinations of two or more.

In order to adequately reduce the durometer of the silicone rubber while avoiding bleed out by this component from the silicone rubber, this straight-chain polydiorganosiloxane is preferably added at from 5 to 100 weight parts and particularly preferably at from 10 to 50 weight parts per 100 weight parts component (A).

In order to further reduce the compression set of the silicone rubber afforded by the cure of the composition under consideration, the composition preferably contains a very small amount of a six-member ring compound having an unsaturated carbon-nitrogen bond in the ring, for example, pyridine, pyrazine, pyrimidine, and 1,3,5-triazine, or a derivative of such compound. The usual additives such as pigments, heat stabilizers, and flame retardants may be introduced into the composition according to the present invention on an optional basis within a range that does not impair the object of the present invention. The heat stabilizers are exemplified by iron oxide, cerium siloxanate, and calcium hydroxide. The flame retardants are exemplified by fumed titanium dioxide and benzotriazole.

The subject composition is prepared by mixing the above-described components (A) to (E) and any optional components to homogeneity. The method for preparing the composition is exemplified by mixing components (A) to (E) and any optional components to homogeneity using a known mixing device such as a 2-roll mill, kneader mixer, Henschel mixer, flow jet mixer, or helical rotor mixer.

The fluorocarbon resin-coated fixing roll according to the present invention will be explained in greater detail below. A fluorocarbon resin-coated fixing roll according to the present invention is presented in Figure 1. As shown in Figure 1, the fluorocarbon resin-coated fixing roll according to the present invention is characterized by the presence of a fluorocarbon resin layer **3** on the circumference of a roll shaft 1 with a silicone rubber layer **2** interposed between the fluorocarbon resin layer and roll shaft wherein the silicone rubber layer **2** is formed by the cure of the silicone rubber composition described hereinbefore.
The fluorocarbon resin layer **3** preferably has a thickness of no more than 0.1 mm and particularly preferably has a thickness within the range from 0.1 to 50 micrometers. The fluorocarbon resin layer **3** is exemplified by polytetrafluoroethylene resins (PTFE), tetrafluoroethylene-perfluoroalkyl vinyl ether copolymer resins (PFA), fluorinated ethylene-propylene copolymer resins (FEP), ethylene-tetrafluoroethylene copolymer resins (ETFE), polychlorotrifluoroethylene copolymer resins (PCTFE), polyvinylidene fluorine resins (PVDF), polyvinyl fluorine resins (PVF), ethylene-chlorotrifluoroethylene copolymer resins (ECTFE), and tetrafluoroethylene-hexafluoropropylene copolymer resins (FEP) The silicone rubber layer 2 preferably has a thickness of 2 to 30 mm.

The technique for fabricating a fixing roll according to the present invention is exemplified by mounting a metal roll shaft 1, made for example of iron or aluminum, in a mold designed for roll fabrication, installing a fluorocarbon resin tube along the interior wall of the mold, injecting the silicone rubber composition into the cavity between the roll shaft and fluorocarbon resin tube, and finally curing the silicone rubber compositicn. The circumference of the roll shaft and the interior surface of the fluorocarbon resin tube are preferably preliminarily treated with primer in order to obtain additional improvements in the adherence by the silicone rubber layer **2** to roll shaft **1** and fluorocarbon resin layer **3**. The compression molders, transfer molders, and injection molders ordinarily used for molding liquid silicone rubber compositions can be used for the pressurized introduction of the silicone rubber composition into the cavity between roll shaft **1** and the fluorocarbon resin tube. A very low curing temperature for the silicone rubber composition results in a slow cure rate and thus a substantially reduced productivity for fabrication of the fluorocarbon resin-covered fixing roll. On the other hand, a very high curing temperature causes the development of creases in the fluorocarbon resin layer 3 on the surface of the resulting fluorocarbon resin-covered fixing roll. As a result of these considerations, the curing temperature is preferably from 70°C to 140°C and particularly preferably from 90°C to 120°C. An additional heat treatment at 150°C to 250°C is preferred for the purpose of obtaining additional reductions in the compression set of the silicone rubber afforded by the relatively low-temperature cure. This heat treatment will not cause creasing in the fluorocarbon resin layer **3** on the surface of the fluorocarbon resin-covered fixing roll because the silicone rubber has a smaller coefficient of thermal expansion than the uncured composition.

The herein described fluorocarbon resin-covered fixing roll according to the present invention is highly reliable, i.e., the adherence between the silicone rubber layer **2** and the roll shaft **1** and fluorocarbon resin layer **3** is excellent, and as a result it is well-suited for use as a fixing roll in electrophotographic copiers, printers, facsimile machines, and the like.

The FFR silicone rubber composition and fluorocarbon resin-covered fixing roll according to the present invention will be explained in greater detail through working examples. The viscosity values reported in the examples were measured at 25°C. The silicone rubbers were evaluated by the following methods.

Durometer of the silicone rubbers was determined by curing the silicon rubber compositions in a hot press at 120°C for 30 minutes to yield a silicone rubber, which was then additionally heated in an oven at 200°C for 4 hours. The durometer of the resulting silicone rubber was measured using the JIS A hardness meter specified in JIS K 6301.

Compression set of the silicone rubbers was determined by curing the silicone rubber compositions in a hot press at 120°C for 30 minutes to yield a silicone rubber, which was then additionally heated in an oven at 200°C for hours. The compression set of the resulting silicone rubbers was measured using the compression set test method specified in JIS K 6301. The heating temperature during the compression test was 180°C and the heating time was 22 hours.

Adherence of the silicone rubbers was tested as follows. A commercial primer was uniformly coated on the surface of an aluminum test panel and was then thoroughly dried by holding in an oven for 30 minutes at 150°C. The silicone rubber composition was coated onto the treated test panel and cured for 30 minutes with a hot press at 100°C to yield silicone rubber adhered to the panel. The silicone rubber was then peeled from the test panel surface at a 90° angle, and the proportion of the area of cohesive failure by the silicone rubber in the overall area of adhesion was determined (% cohesive failure). The % cohesive failure was similarly determined for a curing temperature of 150°C. In another test, a commercial primer was uniformly coated onto a fluorocarbon resin film (tetrafluoroethylene-perfluoroalkyl perfluorovinyl ether copolymer) whose surface had been treated with alkali, and the primer was then thoroughly dried by standing at room temperature for 1 hour. The adhesion of the silicone rubber to this fluorocarbon resin film was thereafter evaluated by the procedure described above.

The volume resistivity of the silicone rubber prepared as described above was measured according to the volume resistivity test method specified in JIS C 2123.
Example 1. 100 weight parts trimethylsiloxy-endblocked mechylvinylsiloxane-dimethylsiloxane copolymer (viscosity = 40,000 mPa·s, vinyl content = 0.12 weight%) with the formula 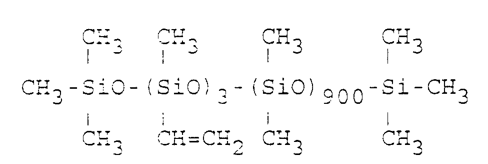 and 30 weight parts crushed quartz micropowder with an average particle size of 5 micrometers were mixed to homogeneity in a mixer. The following were then mixed to homogeneity into the mixture thus prepared to yield a silicone rubber composition: 0.05 weight part cyclic polymethylvinylsiloxane with the formula 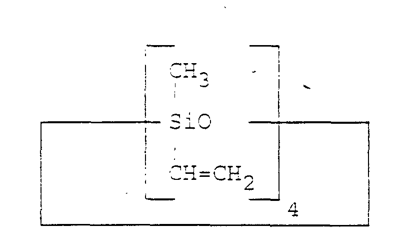 6 weight parts dimethylhydrogensiloxy-endblocked polydimethylsiloxane (viscosity = 38 mPa·s, silicon-bonded hydrogen content = 0.065 weight%) with the formula 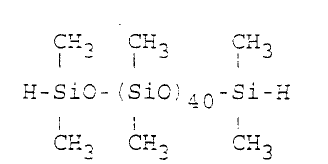 thereby giving a value of 0.8 for the molar ratio of silicon-bonded hydrogen in this polydimethylsiloxane to the total vinyl in the above-described methylvinylsiloxane-dimethylsiloxane copolymer and cyclic polyvinylmethylsiloxane; and 0.5 weight part isopropanolic chloroplatinic acid solution (content of platinum metal = 1 weight%).

The silicone rubber afforded by the cure of this silicone rubber composition had a durometer (JIS A) of 5 and a compression set of 5%. This silicone rubber gave 100% cohesive failure with both the aluminum test panel and fluorocarbon resin film at both curing temperatures of 100°C and 150°C.

Commercial primer was uniformly coated on the circumference of a cylindrical iron roll shaft with a diameter of 10 mm, and the primer was thoroughly dried by placing in an oven at 150°C for 30 minutes. Commercial primer was also uniformly coated on the interior wall of a tube of tetrafluoroethylene-perfluoroalkyl perfluorovinyl ether copolymer (film thickness = 50 micrometers) whose interior wall had been preliminarily treated with alkali. The primer was thoroughly dried by then holding the tube for 1 hour at room temperature. The roll shaft was thereafter mounted in a mold designed for roll fabrication and the tube was installed along the interior wall of the mold. The aforementioned silicone rubber composition was subsequently injected into the cavity between the roll shaft and tube and was cured at 100°C for 30 minutes to yield a fluorocarbon resin-covered fixing roll with a wall thickness of 10 mm. No wrinkles or creases were found upon inspection of the fluorocarbon resin layer on the surface of the fluorocarbon resin-covered fixing roll, while evaluation of the adherence between the silicone rubber layer and roll shaft and fluorocarbon resin layer determined this adherence to be excellent. Creasing still did not appear in the fluorocarbon resin layer on the surface of this fluorocarbon resin-covered fixing roll when the fixing roll was subsequently heated for 4 hours in an oven at 200°C.

This fluorocarbon resin-covered fixing roll was installed in an electrophotographic copier and 150,000 copies were continuously run off on A4 copy paper. No paper creasing or paper jams occurred, and the image was clearly copied.

When a fluorocarbon resin-covered fixing roll was fabricated by curing at 150°C for 30 minutes, creasing was observed in the fluorocarbon resin layer on the surface of this fluorocarbon resin-covered fixing roll.

Comparative Example 1. A silicone rubber composition was prepared as in Example 1, but in this case omitting the cyclic polyvinylmethylsiloxane that was used in Example 1.

This silicone rubber composition cured into a silicone rubber with a durometer (JIS A) of 6 and a compression set of 5%. This silicone rubber gave 20% cohesive failure at a curing temperature of 100°C and 100% cohesive failure at a curing temperature of 150°C.

This silicone rubber composition was also used to fabricate a fluorocarbon resin-covered fixing roll as in Example 1. This fluorocarbon resin-covered fixing roll, which was fabricated by curing for 30 minutes at 100°C, did not evidence creasing in the fluorocarbon resin layer on the surface of the fluorocarbon resin-covered fixing roll, but a partial delamination was observed at the interface between the silicone rubber layer and the roll shaft and at the interface between the silicone rubber layer and fluorocarbon resin layer.

When the fluorocarbon resin-covered fixing roll was fabricated by curing at 150°C for 30 minutes, creasing was observed in the fluorocarbon resin layer on the surface of the fluorocarbon resin-covered fixing roll.

Example 2. 100 weight parts vinyldimethylsiloxy-endblocked vinylmethylsiloxane-dimethylsiloxane copolymer (viscosity = 40,000 mPa·s, vinyl content = 0.16 weight%) with the formula 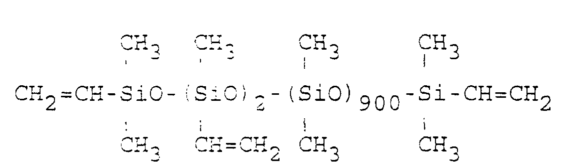 15 weight parts crushed quartz micropowder with an average particle size of 5 micrometers, and 8 weight parts carbon black (Denka Acetylene Black from Denki Kagaku Kogyo Kabushiki Kaisha) were mixed to homogeneity using a mixer. The following were then mixed to homogeneity into the mixture thus prepared to yield a silicone rubber composition: 0.1 weight part cyclic polyhexenylmethylsiloxane with the formula 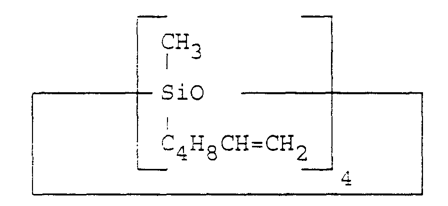 5 weight parts trimethylsiloxy-endblocked dimethylsiloxane-methylhydrogensiloxane copolymer (viscosity = 10 mPa·s, silicon-bonded hydrogen content = 0.24 weight%) with the formula 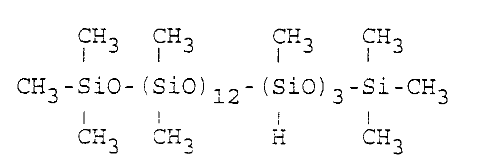 thereby giving a value of 1.8 for the molar ratio of silicon-bonded hydrogen in this dimethylsiloxane-methylhydrogensiloxane copolymer to the total vinyl plus hexenyl in the above methylvinylsiloxane-dimethylsiloxane copolymer and cyclic polyhexenylmethylsiloxane; and 0.5 weight part of an isopropanolic chloroplatinic acid solution (content of platinum metal = 1 weight%).

The silicone rubber afforded by the cure of this silicone rubber composition had a durometer (JIS A) of 12, a volume resistivity of 1 x 10⁴ ohm-cm, and a compression set of 8%. This silicone rubber gave 100% cohesive failure with both the aluminum test panel and fluorocarbon resin film at both curing temperatures of 100°C and 150°C.

This silicone rubber composition was also used to fabricate a fluorocarbon resin-covered fixing roll as in Example 1. This fluorocarbon resin-covered fixing roll, which was fabricated by curing for 30 minutes at 100°C, did not evidence creasing in the fluorocarbon resin layer on the surface of the fluorocarbon resin-covered fixing roll. Moreover, the adherence between the silicone rubber layer and the roll shaft and fluorocarbon resin layer was excellent. Creasing still did not appear in the fluorocarbon resin layer on the surface of the fluorocarbon resin-covered fixing roll when the fixing roll was subsequently heated for 4 hours at 200°C.

This fluorocarbon resin-covered fixing roll was installed in an electrophotographic copier and 150,000 copies were continuously run off on A4 copy paper. No paper creasing or paper jams occurred, and the image was clearly copied.

When a fluorocarbon resin-covered fixing roll was fabricated by curing at 150°C for 30 minutes, creasing was observed in the fluorocarbon resin layer on the surface of this fluorocarbon resin-covered fixing roll.

Comparative Example 2. A silicone rubber composition was prepared as in Example 2, but in this case without using the cyclic polyhexenylmethylsiloxane that was used in Example 2.

The silicone rubber afforded by the cure of this silicone rubber composition had a durometer (JIS A) of 11, a volume resistivity of 1 x 10⁴ ohm-cm, and a compression set of 8%. This silicone rubber gave 50% cohesive failure at a curing temperature of 100°C and 100% cohesive failure at a curing temperature of 120°C.

This silicone rubber composition was also used to fabricate a fluorocarbon resin-covered fixing roll as in Example 1. This fluorocarbon resin-covered fixing roll, which was fabricated by curing for 30 minutes at 100°C, did not evidence creasing in the fluorocarbon resin layer on the surface of the fluorocarbon resin-covered fixing roll, but a partial delamination was observed at the interface between the silicone rubber layer and the roll shaft and at the interface between the silicone rubber layer and fluorocarbon resin layer.

When a fluorocarbon resin-covered fixing roll was fabricated by curing at 150°C for 30 minutes, creasing was observed in the fluorocarbon resin layer on the surface of this fluorocarbon resin-covered fixing roll.

## Claims

1. A silicone rubber composition consisting of:
(A) 100 weight parts straight-chain polydiorganosiloxane comprising at least two silicon-bonded alkenyl groups in each molecule;
(B) 5 to 500 weight parts inorganic filler;
(C) 0.01 to 0.5 weight parts cyclic polydiorganosiloxane comprising at least two silicon-bonded alkenyl groups in each molecule;
(D) polyorganosiloxane comprising at least two silicon-bonded hydrogen atoms in each molecule, in a quantity that affords a value from 0.1 to 10 for the molar ratio of silicon-bonded hydrogen in component (D) to the total silicon-bonded alkenyl in components (A) and (C);
(E) platinum catalyst in a catalytic quantity, and optionally one or more additives selected from a cure inhibitor, pigments, heat stabilizers and flame retardants.

2. A silicone rubber composition according to Claim 1, where component (A) is a straight-chain polydiorganosiloxane comprising at least two silicon-bonded alkenyl groups in each molecule and comprising on average at least 0.5 silicon-bonded alkenyl groups in pendant position on the straight-chain polydiorganosiloxane.

3. A silicone rubber composition according to Claim 1 or Claim 2, where the viscosity of component (A) at 25°C is within a range from 1,000 to 1,000,000 mPa·s.

4. A silicone rubber composition according to Claim 1 or Claim 2, where the viscosity of component (A) at 25°C is within a range from 10,000 to 500,000 mPa·s.

5. A silicone rubber composition according to any of Claims 1 to 4, where all non-alkenyl organic groups substituted on silicon atoms of component (A) are methyl.

6. A silicone rubber composition according to any of Claims 1 to 5, where component (B) is a treated fumed silica micropowder.

7. A silicone rubber composition according to any of Claims 1 to 7, where component (B) comprises 10 to 300 weight parts per 100 weight parts of component (A).

8. A silicone rubber composition according to any of Claims 1 to 7, where component (C) is a cyclic polydiorganosiloxane described by general formula 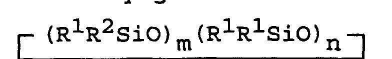 where each R¹ is an independently selected non-alkenyl monovalent hydrocarbon group, each R² is an. independently selected alkenyl group, m is an integer with a value from 3 to 20, n is an integer with a value from 0 to 18, and m+n is an integer with a value from 3 to 20.

9. A silicone rubber composition according to Claim 8, where each R¹ is independently selected from the group consisting of methyl and phenyl, each R² is independently selected from the group consisting of vinyl and hexenyl, n is an integer from 0 to 17, and m+n is an integer from 4 to 10.

10. A silicone rubber composition according to any of Claims 1 to 9, where component (D) is a polyorganosiloxane described by general formula 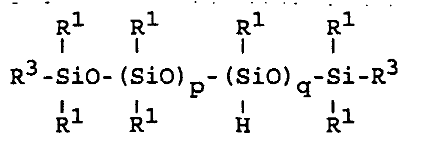 where each R¹ is an independently selected non-alkenyl monovalent hydrocarbon groups, each R³ is independently selection from the group consisting of non-alkenyl monovalent hydrocarbon groups and hydrogen, p is an integer with a value of 0 or greater, and q is an integer with a value of 0 or greater with the proviso that when q is zero both of the R³ groups are hydrogen.

11. A silicone rubber composition according to Claim 10, where each R¹ is independently selected from a group consisting of methyl and phenyl, each R³ is independently selected from the group consisting of hydrogen atoms, methyl, and phenyl, and p+q is an integer with a value from 5 to 100.

12. A silicone rubber composition according to any of Claims 1 to 11, where the molar ratio of silicon-bonded hydrogen atoms in component (D) to the total silicon-bonded alkenyls in components (A) and (C) is within a range of from 0.3 to 5.

13. A silicone rubber composition according to any of Claims 1 to 12 which further comprises from 10 to 50 weight parts per 100 weight parts of component (A) of a straight-chain polydiorganosiloxane comprising no silicon-bonded alkenyl groups and no silicon bonded hydrogen groups and having a viscosity at 25°C of from 1,000 to 10,000,000 mPa·s.

14. A silicone rubber composition according to any of Claims 1 to 13 which further comprises a six-member ring compound having an unsaturated carbon-nitrogen bond in the ring.

15. A fluorocarbon resin-covered fixing roll in which a fluorocarbon resin layer is placed over the circumference of a roll shaft with a silicone rubber layer interposed between the fluorocarbon resin layer and roll shaft, where the silicone rubber layer is formed by the cure of a silicone rubber composition comprising:
(A) 100 weight parts straight-chain polydiorganosiloxane comprising at least two silicon-bonded alkenyl groups in each molecule;
(B) 5 to 500 weight parts inorganic filler;
(C) 0.01 to 0.5 weight parts cyclic polydiorganosiloxane comprising at least two silicon-bonded alkenyl groups in each molecule;
(D) polyorganosiloxane comprising at least two silicon-bonded hydrogen atoms in each molecule, in a quantity that affords a value from 0.1 to 10 for the molar ratio of silicon-bonded hydrogen in component (D) to the total silicon-bonded alkenyl in components (A) and (C); and
(E) platinum catalyst in a catalytic quantity.

16. Use of a cyclic polydiorganosiloxane comprising at least two silicon-bonded alkenyl groups in each molecule to reduce the compression set of a silicone rubber composition consisting of:
- 100 weight parts straight-chain polydiorganosiloxane comprising at least two silicon-bonded alkenyl groups in each molecule;
- 5 to 500 weight parts inorganic filler;
- polyorganosiloxane comprising at least two silicon-bonded hydrogen atoms in each molecule, in a quantity that affords a value from 0.1 to 10 for the molar ratio of silicon-bonded hydrogen in component (D) to the total silicon-bonded alkenyl in components (A) and (C);
- platinum catalyst in a catalytic quantity; and optionally one or more additives selected from a cure inhibitor, pigments, heat stabilizers and flame retardants wherein said cyclic polydiorganosiloxane is added in an amount of between 0.01 to 0.5 weight parts.

## Patentansprüche

1. Siliconkautschukzusammensetzung bestehend aus:
(A) 100 Gewichtsteilen geradkettiges Polydiorganosiloxan, das mindestens zwei siliciumgebundene Alkenylgruppen in jedem Molekül enthält;
(B) 5-500 Gewichtsteilen anorganischer Füllstoff;
(C) 0,01-0,5 Gewichtsteilen cyclisches Polydiorganosiloxan, das mindestens zwei siliciumgebundene Alkenylgruppen in jedem Molekül enthält;
(D) Polyorganosiloxan, das mindestens zwei siliciumgebundene Wasserstoffatome in jedem Molekül enthält, in einer Menge, die einen Wert von 0,1-10 für das Molverhältnis von siliciumgebundenem Wasserstoff in Komponente (D) zu siliciumgebundenem Gesamtalkenyl in Komponenten (A) und (C) gewährleistet;
(E) Platinkatalysator in einer katalytischen Menge und optional ein oder mehrere Additive, ausgewählt aus einem Härtungsinhibitor, Pigmenten, Wärmestabilisatoren und Flammenverzögerungsmitteln.

2. Siliconkautschukzusammensetzung nach Anspruch 1, worin Komponente (A) ein geradkettiges Polydiorganosiloxan ist, das mindestens zwei siliciumgebundene Alkenylgruppen in jedem Molekül enthält und durchschnittlich mindestens 0,5 siliciumgebundene Alkenylgruppen in seitenständiger Position an dem geradkettigen Polydiorganosiloxan enthält.

3. Siliconkautschukzusammensetzung nach Anspruch 1 oder 2, worin die Viskosität von Komponente (A) bei 25°C in einem Bereich von 1.000-1.000.000 mPa·s liegt.

4. Siliconkautschukzusammensetzung nach Anspruch 1 oder 2, worin die Viskosität von Komponente (A) bei 25°C in einem Bereich von 10.000-500.000 mPa·s liegt.

5. Siliconkautschukzusammensetzung nach einem der Ansprüche 1-4, worin alle organischen Nichtalkenylgruppen, die an Siliciumatomen von Komponente (A) substituiert sind, Methyl sind.

6. Siliconkautschukzusammensetzung nach einem der Ansprüche 1-5, worin Komponente (B) ein behandeltes Mikropulver aus pyrogener Kieselsäure ist.

7. Siliconkautschukzusammensetzung nach einem der Ansprüche 1-7, worin Komponente (B) 10-300 Gewichtsteile pro 100 Gewichtsteile Komponente (A) ausmacht.

8. Siliconkautschukzusammensetzung nach einem der Ansprüche 1-7, worin Komponente (C) ein cyclisches Polydiorganosiloxan ist. das durch die allgemeine Formel 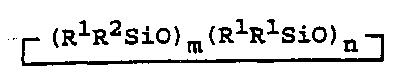 beschrieben wird, worin jedes R¹ eine unabhängig ausgewählte monovalente Nichtalkenylkohlenwasserstoffgruppe ist, jedes R² eine unabhängig ausgewählte Alkenylgruppe ist, m eine ganze Zahl mit einem Wert von 3-20 ist, n eine ganze Zahl mit einem Wert von 0-18 ist und m+n eine ganze Zahl mit einem Wert von 3-20 ist.

9. Siliconkautschukzusammensetzung nach Anspruch 8, worin jedes R¹ unabhängig voneinander ausgewählt ist aus der Gruppe bestehend aus Methyl und Phenyl, jedes R² unabhängig voneinander ausgewählt ist aus der Gruppe bestehend aus Vinyl und Hexenyl, n eine ganze Zahl von 0-17 ist und m+n eine ganze Zahl von 4-10 ist.

10. Siliconkautschukzusammensetzung nach einem der Ansprüche 1-9, worin Komponente (D) ein Polydiorganosiloxan ist, das durch die allgemeine Formel 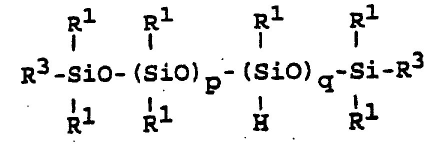 beschrieben wird, worin jedes R¹ eine unabhängig ausgewählte monovalente Nichtalkenylkohlenwasserstoffgruppe ist, jedes R³ unabhängig ausgewählt ist aus der Gruppe bestehend aus monovalenten Nichtalkenylkohlenwasserstoffgruppen und Wasserstoff, p eine ganze Zahl mit einem Wert von 0 oder größer ist und q eine ganze Zahl mit einem Wert von 0 oder größer ist, unter der Voraussetzung, dass, wenn q gleich 0 ist, beide R³-Gruppen Wasserstoff sind.

11. Siliconkautschukzusammensetzung nach Anspruch 10, worin jedes R¹ unabhängig voneinander ausgewählt ist aus einer Gruppe bestehend aus Methyl und Phenyl, jedes R³ unabhängig voneinander ausgewählt ist aus der Gruppe bestehend aus Wasserstoffatomen, Methyl und Phenyl und p+q eine ganze Zahl mit einem Wert von 5-100 ist.

12. Siliconkautschukzusammensetzung nach einem der Ansprüche 1-11, worin das .Molverhältnis von siliciumgebundenen Wasserstoffatomen in Komponente (D) zu allen siliciumgebundenen Alkenylen in Komponenten (A) und (C) in einem Bereich von 0,3-5 liegt.

13. Siliconkautschukzusammensetzung nach einem der Ansprüche 1-12, die weiterhin 10-50 Gewichtsteile pro 100 Gewichtsteile Komponente (A) eines geradkettigen Polydiorganosiloxans enthält, das keine siliciumgebundenen Alkenylgruppen und keine siliciumgebundenen Wasserstoffgruppen enthält und eine Viskosität bei 25°C von 1.000-10.000.000 mPa·s hat.

14. Siliconkautschukzusammensetzung nach einem der Ansprüche 1-13, die weiterhin eine sechsgliedrige Ringverbindung mit einer ungesättigten Kohlenstoff-Stickstoff-Bindung in dem Ring enthält.

15. Fluorkohlenstoffharzbeschichtete Fixierrolle, in welcher eine Fluorkohlenstoffharzschicht um den Umfang einer Rollenwalze mit einer Siliconkautschukschicht zwischen der Fluorkohlenstoffharzschicht und der Rollenwalze dazwischen geschoben angeordnet ist, wobei die Siliconkautschukschicht durch Härten einer Siliconkautschukzusammensetzung, enthaltend:
(A) 100 Gewichtsteile geradkettiges Polydiorganosiloxan, das mindestens zwei siliciumgebundene Alkenylgruppen in jedem Molekül enthält;
(B) 5-500 Gewichtsteile anorganischen Füllstoff;
(C) 0,01-0,5 Gewichtsteile cyclisches Polydiorganosiloxan, das mindestens zwei siliciumgebundene Alkenylgruppen in jedem Molekül enthält;
(D) Polyorganosiloxan, das mindestens zwei siliciumgebundene Wasserstoffatome in jedem Molekül enthält, in einer Menge, die einen Wert von 0.1-10 für das Molverhältnis von siliciumgebundenem Wasserstoff in Komponente (D) zu siliciumgebundenem Gesamtalkenyl in Komponenten (A) und (C) gewährleistet, und
(E) Platinkatalysator in einer katalytischen Menge, gebildet wird.

16. Verwendung eines cyclischen Polydiorganosiloxans, das mindestens zwei siliciumgebundene Alkenylgruppen in jedem Molekül enthält, um den Druckverformungsrest einer Siliconkautschukzusammensetzung, bestehend aus:
- 100 Gewichtsteilen geradkettigem Polydiorganosiloxan, das mindestens zwei siliciumgebundene Alkenylgruppen in jedem Molekül enthält;
- 5-500 Gewichtsteilen anorganischem Füllstoff;
- Polydiorganosiloxan, das mindestens zwei siliciumgebundene Wasserstoffatome in jedem Molekül enthält, in einer Menge, die einen Wert von 0,1-10 für das Molverhältnis von siliciumgebundenem Wasserstoff in Komponente (D) zu siliciumgebundenem Gesamtalkenyl in Komponenten (A) und (C) gewährleistet;
- Platinkatalysator in einer katalytischen Menge und optional einem oder mehreren Additiven, ausgewählt aus einem Härtungsinhibitor, Pigmenten, Wärmestabilisatoren und Flammenverzögerungsmitteln, worin dieses cyclische Polydiorganosiloxan in einer Menge zwischen 0,01 und 0,5 Gewichtsteilen zugegeben wird, herabzusetzen.

## Revendications

1. Composition d'élastomère de silicone constituée de :
(A) 100 parties en poids d'un polydiorganosiloxane à chaîne droite comprenant au moins deux groupes alcényle liés au silicium dans chaque molécule ;
(B) 5 à 500 parties en poids de charge inorganique ;
(C) 0,01 à 0,5 partie en poids de polydiorganosiloxane cyclique comprenant au moins deux groupes alcényle liés au silicium dans chaque molécule ;
(D) du polyorganosiloxane comprenant au moins deux atomes d'hydrogène liés au silicium dans chaque molécule, en une quantité qui fournit une valeur de 0,1 à 10 au rapport molaire de l'hydrogène lié au silicium dans le composant (D) aux groupes alcényle totaux liés au silicium dans les composants (A) et (C) ;
(E) un catalyseur au platine en une quantité catalytique et, éventuellement un ou plusieurs additifs choisis parmi un inhibiteur de durcissement, les pigments, les stabilisants à la chaleur et les retardateurs de flamme.

2. Composition d'élastomère de silicone selon la revendication 1, dans laquelle le composant (A) est un polydiorganosiloxane à chaîne droite comprenant au moins deux groupes alcényle liés au silicium dans chaque molécule et comprenant en moyenne au moins 0,5 groupe alcényle lié au silicium en position pendante sur le polydiorganosiloxane à chaîne droite.

3. Composition d'élastomère de silicone selon la revendication 1 ou la revendication 2, dans laquelle la viscosité du composant (A) à 25°C se trouve dans une plage de 1 000 à 1 000 000 mPa.s.

4. Composition d'élastomère de silicone selon la revendication 1 ou la revendication 2, dans laquelle la viscosité du composant (A) à 25°C se trouve dans une plage de 10 000 à 500 000 mPa.s.

5. Composition d'élastomère de silicone selon l'une quelconque des revendications 1 à 4, dans laquelle tous les groupes organiques non alcényle substitués sur les atomes de silicium du composant (A) sont des groupes méthyle.

6. Composition d'élastomère de silicone selon l'une quelconque des revendications 1 à 5, dans laquelle le composant (B) est une micropoudre de silice fumée traitée.

7. Composition d'élastomère de silicone selon l'une quelconque des revendications 1 à 6, dans laquelle le composant (B) représente 10 à 300 parties en poids pour 100 parties en poids du composant (A).

8. Composition d'élastomère de silicone selon l'une quelconque des revendications 1 à 7, dans laquelle le composant (C) est un polydiorganosiloxane cyclique décrit par la formule générale 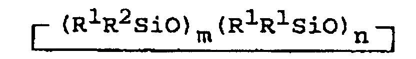 dans laquelle chaque R¹ est un groupe hydrocarboné monovalent non alcényle choisi indépendamment, chaque R² est un groupe alcényle choisi indépendamment, m est un nombre entier d'une valeur de 3 à 20, n est un nombre entier d'une valeur de 0 à 18 et m + n est un nombre entier d'une valeur de 3 à 20.

9. Composition d'élastomère de silicone selon la revendication 8, dans laquelle chaque R¹ est choisi indépendamment dans le groupe constitué des groupes méthyle et phényle, chaque R² est choisi indépendamment dans le groupe constitué des groupes vinyle et hexényle, n est un nombre entier de 0 à 17 et m + n est un nombre entier de 4 à 10.

10. Composition d'élastomère de silicone selon l'une quelconque des revendications 1 à 9, dans laquelle le composant (D) est un polyorganosiloxane décrit par la formule générale 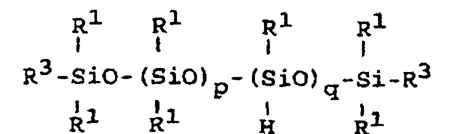 dans laquelle chaque R¹ est un groupe hydrocarboné monovalent non alcényle choisi indépendamment, chaque R³ est choisi indépendamment dans le groupe constitué des groupes hydrocarbonés monovalents non alcényle et de l'hydrogène, p est un nombre entier d'une valeur de 0 ou plus, et q est un nombre entier de 0 ou plus, avec comme condition que lorsque q est zéro, les deux groupes R³ soient des atomes d'hydrogène.

11. Composition d'élastomère de silicone selon la revendication 10, dans laquelle chaque R¹ est choisi indépendamment dans le groupe constitué des groupes méthyle et phényle, chaque R³ est choisi indépendamment dans le groupe constitué des atomes d'hydrogène et des groupes méthyle et phényle, et p + q est un nombre entier d'une valeur de 5 à 100.

12. Composition d'élastomère de silicone selon l'une quelconque des revendications 1 à 11, dans laquelle le rapport molaire des atomes d'hydrogène liés au silicium dans le composant (D) aux groupes alcényle totaux liés au silicium dans les composants (A) et (C) se trouve dans une plage de 0,3 à 5.

13. Composition d'élastomère de silicone selon l'une quelconque des revendications 1 à 12, qui comprend en outre de 10 à 50 parties en poids pour 100 parties en poids du composant (A) d'un polydiorganosiloxane à chaîne droite comprenant des groupes alcényle non liés au silicium et des atomes d'hydrogène non liés au silicium et présentant une viscosité à 25°C de 1 000 à 10 000 000 mPa.s.

14. Composition d'élastomère de silicone selon l'une quelconque des revendications 1 à 13 qui comprend en outre un composé cyclique à six chaînons comportant une liaison carbone-azote insaturée dans le cycle.

15. Rouleau de fixage revêtu de résine fluorocarbonée, dans lequel une couche de résine fluorocarbonée est placée sur la circonférence d'un arbre de rouleau avec une couche d'élastomère de silicone interposée entre la couche de résine fluorocarbonée et l'arbre de rouleau, dans lequel la couche d'élastomère de silicone est formée par le durcissement d'une composition d'élastomère de silicone comprenant :
(A) 100 parties en poids d'un polydiorganosiloxane à chaîne droite comprenant au moins deux groupes alcényle liés au silicium dans chaque molécule ;
(B) 5 à 500 parties en poids de charge inorganique ;
(C) 0,01 à 0,5 partie en poids de polydiorganosiloxane cyclique comprenant au moins deux groupes alcényle liés au silicium dans chaque molécule ;
(D) du polyorganosiloxane comprenant au moins deux atomes d'hydrogène liés au silicium dans chaque molécule, en une quantité qui assure une valeur de 0,1 à 10 au rapport molaire de l'hydrogène lié au silicium dans le composant (D) aux groupes alcényle totaux liés au silicium dans les composants (A) et (C) ; et
(E) un catalyseur au platine en une quantité catalytique.

16. Utilisation d'un polydiorganosiloxane cyclique comprenant au moins deux groupes alcényle liés au silicium dans chaque molécule pour réduire la compression permanente d'une composition d'élastomère de silicone constituée de :
- 100 parties en poids d'un polydiorganosiloxane à chaîne droite comprenant au moins deux groupes alcényle liés au silicium dans chaque molécule ;
- 5 à 500 parties en poids de charge inorganique ;
- du polyorganosiloxane comprenant au moins deux atomes d'hydrogène liés au silicium dans chaque molécule, en une quantité qui assure une valeur de 0,1 à 10 au rapport molaire de l'hydrogène lié au silicium dans le composant (D) aux groupes alcényle totaux liés au silicium dans les composants (A) et (C) ;
- un catalyseur au platine en une quantité catalytique ; et éventuellement un ou plusieurs additifs choisis parmi un inhibiteur de durcissement, les pigments, les stabilisants à la chaleur et les retardateurs de flamme, dans laquelle ledit polydiorganosiloxane cyclique est ajouté en une quantité variant entre 0,01 et 0,5 partie en poids.
